# EUROPEAN PATENT APPLICATION

(11) **EP 2 737 796 A1**
(43) Date of publication of application: **04.06.2014**
(21) Application number: 12464032.7
(22) Date of filing: 04.12.2012
(51) Int. Cl.: A01N 25/00, A01N 25/02, A01N 65/10, A01N 65/12

(54) **Insecticidal composition based on pyrethrins and essential oils and process for its obtainment**

(30) Priority: 03.12.2012 RO 201200930
(71) Applicant: SC Amia International Import Export SRL, 075100 Otopeni Jud. Illfov (RO)
(72) Inventor: Velea Sanda, 023783 Bucharest (RO); Pairault, Adriana-Liliana, 077190 Voluntari jud. Ilfov (RO); Oancea Florin, 062082 Bucharest (RO); Stepan Emil, 061315 Bucharest (RO); Stilpeanu Daniela Lelieana, 061078 Bucuresti (RO)

(57) **Abstract**

The insecticide composition consists of 50% pyrethrum concentrate, essential oils from dill seeds, *Anethum graveolens,* and/or from parsley seeds *Petroselinum crispum* and/or lovage leaves, *Levisticum officinale,* non-ionic surfactant agents of vegetal origin, sodium coco sulfate, soy lecithin, coco-glucoside and solvent S. The method for obtaining involves the following stages: preparing the solvent S by the transesterification reaction of vegetable oils from sunflower and/or rapeseed and/or soybean, in an excess of ethylic alcohol and in the presence of potassium hydroxide; extraction of essential oils from the vegetal material by maceration for 14 days at a temperature of 20-25°C in the solvent S; filtering the maceration obtaining the solvent S with content of essential oils, used to obtain insecticide compositions with pyrethrins.

## Description

This invention refers to a composition based on natural pyrethrins and essential oils intended to: combat insects generating discomfort for people in their houses, limit the populations of harmful insects in the organic / ecological animal growing farms, protect the ornamental plants or the plants from organic /ecological cropping systems, and to a process to obtain this insecticide composition.

There are known compositions based on natural pyrethrins; pyrethrum *Chrysanthemum* (*Tanacetum*) *cinerariaefolium* extracts contain 6 types of chemical compounds, pyrethrin I, pyrethrin II, cinerin I, cinerin II, jasmolin I, jasmolin II, referred to generically as pyrethrins, with insecticide action. Pyrethrins have immediate effect (*knock-down*) and, if correctly used, are very safe for humans and non-target warm-blooded organisms. Compositions developed until now aimed to synergize this immediate insecticide action, by blocking the metabolism of pyrethrins, and reducing the degradation rate. Patent DE3717467 describes a water-based composition, buffered to pH between 3.0 and 5.0, in which the synergizing action of the piperonyl butoxide is amplified by turpentine, lavender and citronella oils. The mixture of essential oils is presented as having a beneficial effect on the composition's stability in time.

Because piperonyl butoxide has carcinogenic potential (as proven for instance by Muguruma et al., 2009, Arch. Toxicol. 83:183-193), US patent 75344447 (B2), presents a composition in which the action of the pyrethrins toward insects is synergized by the essential oils, including thymol, thyme oil, eugenol, etc. The composition is included in various carrying agents, solid or liquid, known to be used for the formulation of pesticides.

In order to maintain the insecticide action of the pyrethrins against populations of insects that have developed resistance against insecticides, patent application WO2008015413 (A2) presents an insecticide composition including cymene and a pyrethrin / a synthetic pyrethroid or a growth regulator. The cymene used is either chemically synthesized or from essential oils of plants such as thyme (*Thymus vulgaris* L; *Thymus* ssp), *Monarda punctata* L., summer savory (*Satureja hortensis*), cumin (*Cuminum cyminurn*), etc. In this composition, the synergizers used are piperonyl butoxide or dill oil. As non-polar solvents for formulations of emulsifiable concentrate type, aliphatic hydrocarbons or esters of vegetable oils are used, and the surfactants are alkyl polyglycosides, calcium dodecylbenzene sulfonate, polyoxyethylenised alkyl phenols, sorbitan or polyoxyethylenised esters of sorbitan or sodium salts of sulfonated alkanes. For protection against the UV degradation of pyrethrins, UV screening agents are used, such as carotenes, preferably astaxanthin.

Compositions in which the base solvent is water or esters of vegetable oils, such as those described by patent DE3717467, or patent GB2440664, respectively, have a low freeze - thaw stability. Patent GB2440664 mentions the need to use compounds with anti-freezing properties, such as low molecular mass aliphatic polyols, ethylene glycol, propylene glycol, diethylene glycol, glycerin, or urea, hexandiol or sorbitol, especially in compositions conditioned as emulsifiable concentrates.

Another solution for increasing freeze stability is to use as non-polar solvent mixtures of esters of vegetable oils, cold - stabilized, such as the ones described by US patent application US2011275599 A1, also published as WO2011140005 (A2) W02011140005 (A3).

A disadvantage of the compositions described by the patents GB2440664 or US 75344447 consists of the presence, together with natural compounds from renewable sources, of chemical additives that reduce the acceptance degree from non-professional users, and which make impossible to use such composition in organic agricultural systems.

Another disadvantage of these compositions in which the base solvent is represented by water or esters of vegetable oils is that of the risk of microbial degradation on time. Addition of chemical preservatives worsens the problems related to low acceptance by non-professional users and severely limits the possibility to certify such compositions for use in the organic / ecological agricultural systems.

The technical problem solved by the invention is related to these disadvantage presented in the state of the art by obtaining of several compositions with high stability on storage, being protected against degradations resulted from storage at low / freezing temperatures and with low risk of development of spoilage microorganisms, and in which all ingredients are obtained from agricultural natural resources, with minimal processing and with traceability possibility, allowing subsequent certification for organic agricultural systems, in which the holistic principle requires that all agricultural ingredients come from the similar agricultural systems.

In order to obtain such compositions, it is also necessary to develop processes which involve minimal processing of the raw materials, with low energy consumption.

The object of this invention is to offer an insecticide composition based on natural pyrethrins, made exclusively with ingredients from agricultural resources, offering the necessary traceability for certification as a product allowed to be used in organic agricultural systems and generating high acceptance from non-professional consumers. Another object of this invention is to develop a method for obtaining this composition that would involve minimal processing of the vegetal raw materials at low temperatures.

The invention solves the technical problem because it uses as solvent for the pyrethrum concentrate, with 50% pyrethrin content, and for the essential oils, the raw reaction mass obtained by the transesterification with excess ethylic alcohol, in the presence of potassium hydroxide, of the sunflower oil and/or rapeseed oil and/or soy oil. The authors found that this raw mass, containing ethylic esters of fatty acids, glycerin, potassium salts of fatty acids, triglycerides and ethylic alcohol, is a very good solvent for pyrethrins and essential oils, with increased stability for cold storage, and which have excellent properties for formulation and application. The insecticide composition is formulated for later application in two preferred forms as preferred embodiments of the invention, as emulsifiable concentrate and liquid for spraying.

The insecticide composition according to the invention, conditioned as emulsifiable concentrate, consists of 1 ... 3 parts 50% pyrethrum concentrate, 1.5 ... 3 parts essential oils from dill seeds, *Anethum graveolens,* and/or parsley seeds *Petroselinum crispum* and/or lovage leaves, *Levisticum officinale,* 7.5 ... 10 parts couple of anionic/non-ionic surfactant agents of vegetal origin, sodium cocosulfate, soy lecithin, 84 ... 90 parts solvent (S).

The insecticide composition according to the invention, conditioned as liquid for spraying, consists of: 0.01 ... 0.02 parts 50% pyrethrum concentrate; 0.01 ... 0.02 parts essential oils from dill seeds, *Anethum graveolens,* and/or parsley seeds, *Petroselinum crispum,* and/or lovage leaves, *Levisticum officinale,* 1 ... 1.5 parts soy lecithin, 1 ... 1.5 parts coco-glucoside as a non-ionic surfactant agent, 0.001 ... 0.002 g tocopherol as an anti-oxidizing agent, 97 ... 98 parts solvent (S).

The solvent according to the invention (S) consists of 68 ... 70 parts ethylic esters of fatty acids from vegetable oils: sunflower, characterized by saponification index: 186 ... 192 mg KOH/g, iodine index: 130 mg iodine / 100g, fatty acid structure: palmitic (C16) 5 to 6%, stearic (C18) 4 to 5%, oleic (C18-1) 30 to 40%, linoleic (C18-2) 53 to 68%; rapeseed, characterized by saponification index: 189 to 205 mg KOH/g, iodine index 110-116 mg iodine / 100g, fatty acid structure: palmitic (C16) 5 to 6%, stearic (C18) 2-3%, oleic (C18-1) 60 to 65%, linoleic (C18-2) 20 to 30%; or soybean, characterized by: saponification index: 185 to 190 mg KOH/g, iodine index: 125 to 136 mg iodine / 100g, fatty acid structure: stearic (C18) 4 to 5%, oleic (C18-1) 20 to 30%, linoleic (C18-2) 50 to 60%, linolenic (C18-3) 8 to 10%; 6 ... 8 parts potassium salts of fatty acids; 6 ... 8 parts glycerin, 4 ... 5 parts triglycerides, 10 ... 12 parts ethylic alcohol and 1 part lecithin.

By performing a cold extraction process of the dill seeds and/or of the parsley seeds and/or of the lovage leaves, in this raw reaction mass, is obtained, after filtration, a solvent containing essential oils, which present, in the same time, properties of: synergizing the insecticide action of pyrethrins, by maintaining the insecticide action after application due to the protection against the photo-oxidative action of UV radiation and inhibition of the development of spoilage microorganisms.

The process for obtaining insecticide compositions based on pyrethrins and essential oils, according to the invention, consists of the following steps:
(a) Obtaining the solvent S by the transesterification reaction of sunflower and/or rapeseed and/or soy vegetable oils, in the presence of ethylic alcohol with the oil-to-alcohol ratio of 1 part to 0.28 ... 0.32 parts and potassium hydroxide with an oil-to-potassium hydroxide ratio of 1 part to 0.019 ... 0.021 parts, at temperatures of 40 to 70°C, for 3 to 5 hours;
(b) The extraction of essential oils from dill seeds and/or parsley seeds and/or lovage leaves by maceration for 14 days at a temperature of 20 to 25°C in the solvent S obtained in stage (a) with a plant-to-solvent ratio of 1 part to 2 ... 2.5 parts;
(c) Filtering the maceration obtained with solvent S containing essential oils, used to obtain insecticide compositions with pyrethrins;
(d) Conditioning the insecticidal composition, in the form of emulsifiable concentrate or of sprayable insecticide solution, by adding pyrethrum concentrate with 50% natural pyrethrins and natural emulsifiers in the solvent S containing essential oils.

The invention presents the following advantages:
- High freeze - thaw stability resulted from the use as solvent of the raw reaction mass resulting from the trans-esterification of vegetable oils with ethylic alcohol in excess, in the presence of potassium hydroxide, due to the content of glycerol and excess alcohol;
- High storage stability due to the antimicrobial action of essential oils from dill, parsley and lovage, as well as the excess of ethylic alcohol that reduces water activity;
- Synergizing the insecticide action of the pyrethrins by the essential oils from dill, parsley and lovage and by potassium salts of fatty acids with insecticide and surfactant action;
- Protection of the pyrethrins after application toward the destructive action of UV radiation from the sunlight spectrum by carotene resulted from the vegetal material used;
- Possibility for certification for use in organic agriculture and a high degree of acceptance for non-professional users because all ingredients are from agricultural raw materials, recognized for their safe use, with certifiable origin from organic agricultural systems.
- Low energy consumptions because the obtaining process takes place under mild conditions;
- By-products, i.e. the extracted vegetal material, can be used as feed or composting substrate and is not represent a problem for the environment.
Further are presented several examples which are illustrating the invention without limiting it.

*Example 1.* In a four-necked reaction flask fitted with an agitator driven by an electric motor, condenser, dripping funnel, thermometer and heated on a thermostated electric bath, introduce 100 g of raw sunflower oil, having saponification index 188.45 mg KOH/g, acidity index 1.24 mg KOH/g, water content 0.06%, add, under stirring, a solution obtained by dissolving 1.6 g KOH p.a. in 29.6 g absolute ethanol (99.8%). Continue stirring maintaining the temperature at 50 to 60°C, for 3 to 4 ore. The result is 132 g of homogeneous liquid (solvent S1) consisting of: 68.80% ethylic esters of fatty acids, 7.39% glycerin, 11.90% ethanol, 5.79% potassium salts of fatty acids, 4.91% triglycerides of fatty acids, 1,21% lecithin.

In the solvent S1, 132 g, add 53 g of ground dill seeds and macerate at room temperature for 14 days. Filter through a press filter and obtain over 100 g of solvent with 1.5 % active principles extracted from dill seeds (S1 + UEM). The content of active principles, consisting mainly of carvone and limonene, is determined by gas chromatography (GC), combined with mass spectrometry, using a GC/MS Triple Quad Agilent (Agilent, Santa Clara, CA, US); chromatography column: DB-WAX, 30 m x 0,25 mm, film thickness 0.25 µm; working parameters: injector temperature 250°C; detector temperature: 250°C; column temperature: 70°C for 2 minutes, increasing by 10 °C/min at 230°C and stationary for 10 minutes; total work time: 82 minutes.

The insecticide composition CE1, conditioned as emulsifiable concentrate is prepared according to the following method: 8.83 g anionic/non-ionic surfactant agents of vegetal origin, sodium coco sulfate (Mackol® CAS-100N, Rhodia, Cranbury, NJ, US), HLB = 38 and modified soy lecithin with hydrophilic - lipophilic balance HLB greater than 8 (Thermolec^{®} WFC, Archer Daniels Midland, Decatur, II, US) with the ratio of 4 parts : 6 parts, is dissolved in 70-75 ml of solvent (S1+UEM) by stirring and heating to 40-45°C. Over the resulting solution, cooled to room temperature, add 2.65 g of 50% pyrethrum concentrate extract and 0.2 g of tocopherol, anti-oxidizing agent, homogenize, add the rest of the solvent up to 100 g, obtaining CE1. CE1, emulsifiable concentrate, has the following composition: 1.3% pyrethrins 1.3% essential oils from dill seeds, 8.83% anionic/non-ionic surfactant agents of vegetal origin, sodium coco sulfate, soy lecithin, with a ratio of 4:6, 0.18% tocopherol.

*Example 2.* In the solvent S1 prepared as on Example 1, add 53 g of ground parsley seeds and macerate at room temperature for 14 days. Filter through a press filter and obtain 100 g of raw solvent with 2.5 % active principles (S1 + UEP) consisting mainly of apiol and myristicin, determined by gas chromatography (GC), combined with mass spectrometry. By adding pyrethrum and emulsifiers, an emulsifiable concentrate CE2 is prepared with content 4.26 % of 1:1 mixture of pyrethrum extract and volatile oil from parsley seeds as follows: 10.24 g anionic/non-ionic surfactant agents of vegetal origin: sodium coco sulfate (Mackol® CAS-100N, Rhodia), HLB = 38 and modified soy lecithin with hydrophilic - lipophilic balance HLB greater than 8 (Thermolec^{®} WFC, Archer Daniels Midland) with a ratio of 4 parts : 6 parts, dissolved in 70-75 mL of solvent (S1+UEP) with stirring and heating to 40-45°C. Over the surfactant solution, cooled to room temperature, add 4.27 g of 50% pyrethrum concentrate extract and 0.17g of tocopherol and homogenize, add the rest of the solvent up to 100 g of emulsifiable concentrate. Obtain 100 g emulsifiable concentrate CE2 with the following composition: 2.13% pyrethrins, 2.13% essential oils from parsley seeds, 10.24% anionic/non-ionic surfactant agents of vegetal origin, sodium coco sulfate, soy lecithin, with a ratio of 4:6, 0.17% tocopherol.

*Example 3.* The solvent with essential oils (S1 + UEM), obtained according to example 1 is conditioned as a solution for bottling in spray tubes and application by pressure of a propellant gas, with a concentration of 0.02% pyrethrum extract + volatile oils from dill seeds with a ratio of 1:1 according to the following working method: in 70 g solvent S1+ UEM, add one by one under stirring 0.02 g of pyrethrum extract 50%, 1 g of soy lecithin (Thermolec^{®} WFC, Archer Daniels Midland) and 1 g of coco-glucoside (Plantacare 818, BASF, Ludwigshafen, Germany), as non-ionic surfactant agents, both with HLB greater than 8, and 0.002 g tocopherol as an anti-oxidizing agent, and maintain under stirring until a homogeneous solution is obtained. Complete with solvent S1 up to 100 g. The result is the insecticide composition conditioned as liquid for spraying, LS1, consisting of: 0.02% pyrethrum concentrate 50%; 0.02% essential oils, 1% soy lecithin, 1% coco-glucoside as non-ionic surfactant agent, 0.02% g tocopherol as anti-oxidizing agent, 97.94% solvent S.

*Example 4.* The solvent with essential oils (S1 + UEM), obtained according to example 1 is conditioned as emulsifiable concentrate with content of 2.74% active principles, pyrethrum extract and volatile oil from dill seeds, with a ratio of 1: 2, as follows: 7.29 g of anionic/non-ionic surfactant agents of vegetal origin: sodium coco sulfate, soy lecithin, are dissolved in 70-75 mL of solvent, (S1+UEM) with stirring and heating Ia 40-45°C. Over the surfactant solution, cooled to room temperature, add 1.37g pyrethrum extract 50% and 0.18g tocopherol, homogenize and add the rest of the solvent up to 100g emulsifiable concentrate.

*Example 5.* Work the same as on example 1, but use rapeseed oil. The difference to example 1 is given by a different composition of the resulting solvent, S2 in this case, in the fatty acids from the ethylic esters and on their potassium salts.

*Example 6**.*** Work the same as on example 1, but use soybean oil. The difference from example 1 is given by a different composition of the resulting solvent, S3 in this case, in the fatty acids from the ethylic esters and on their potassium salts.

*Example 7.* The solvent with essential oils from dill (S1 + UEM) obtained as on example 1, is used for the cold extraction of dry lovage leaves. In the solvent (S1+UEM), 132 g, add 53 g of ground dry lovage leaves and macerate at room temperature for 14 days. Filter through a press filter and obtain over 100 g of solvent with 1.5 % active principles extracted from dill seeds and 0.25% essential oils from lovage (S1 + UEM + UEL). Essential oils from lovage, *Levisticum officinale,* determined by gas chromatography (GC), combined with mass spectrometry as on example 1, consist prevailingly of ß-phellandren and 1-p-methyl-8-yl acetate. The solvent (S1 + UEM + UEL) is used to obtain an emulsifiable concentrate according to example 1, obtaining CE3.

*Example 8.* The solvent with essential oils from parsley (S1 + UEP) obtained as on example 2, is used for the cold extraction of ground dry lovage leave. In the solvent S1 + UEP, 132 g, add 53 g of ground dry lovage leaves and macerate at room temperature for 14 days. Filter through a press filter and obtain over 100 g of solvent with 2.5 % active principles, extracted from parsley seeds, and 0.25% essential oils from lovage leave (S1 + UEP + UEL). Essential oils from lovage leave, *Levisticum officinale,* in this solvent, determined by gas chromatography (GC), coupled to mass spectrometry as on example 1, are represented predominantly by ß-phellandren and 1-p-methyl-8-yl acetate. The solvent (S1 + UEP + UEL) is used to obtain an emulsifiable concentrate according to example 1, resulting CE4.

*Example 9.* The solvent with essential oils from dill (S1 + UEM) obtained as on example 1, is combined in a 1:1 ratio with the solvent with essential oils from parsley (S1 + UEP) obtained as on example 2. The resulting mixture, (S1 + UEM + UEP), contains 0.75% active principles from dill essential oil and 1.25% active principles from parsley essential oil, and is used to obtain a pyrethrin-based insecticide composition as on example 1, resulting the emulsifiable concentrate CE5.

*Example 10.* The solvent with essential oils from dill (S1 + UEM) obtained as on example 1, is combined in a 1:1 ratio with the solvent with essential oils from parsley (S1 + UEP) obtained as on example 2. The resulting mixture (S1 + UEM + UEP) is used for the cold extraction of dry lovage leaves. In the solvent S1 + UEP, 132 g, add 53 g of ground dry lovage leaves and macerate at room temperature for 14 days. Filter through a press filter and obtain over 100 g of solvent with 0.75% active principles from dill essential oil, 1.25% active principles from parsley essential oil and 0.25% essential oils from lovage (S1 + UEM + UEP + UEL). This mixture (S1 + UEM + UEP + UEL) is used to obtain a pyrethrin-based insecticide composition as on example 1, obtaining the emulsifiable concentrate CE6.

*Example 11.* A biotest was carried out testing the effectiveness of emulsifiable concentrates CE1 to CE6 obtained according to the above examples. The biotest was carried out on flies, *Musca domestica* L., WHO sensitive strain. Flies were reared according to the protocol described by Basden, 1946, Bull Entomol Res 37:381 - 387. Fly eggs were collected on a gauze impregnated with UHT milk with 1.5% fat. After 3 days, the gauzes with eggs were transferred into 5-litre plastic buckets containing a rearing medium for fly larvae, consisting of 300 g wheat bran, 7 g brewer's yeast, 15 g molasses, mixed with 500 ml warm water. Adult flies were kept in insect growing cages (BugDorm-4090; Megaview, Taichung, Taiwan) and fed with a mixture of powder milk and sugar, 1:1, and with water as needed. The flies used for the biotest had 9 to 11 days from hatching from the pupas. The biotest was done using the topical method described by Kristensen et al., 2001, Pest Manag Sci 57:82-89. Adult flies, male and female, were anaesthetized with CO₂ before being applied 1 *µ*l of a 3% solution from the emulsifiable concentrates CE1, CE3, CE4, CE5 and CE6, and 1.85% from CE2. This concentration of emulsifiable concentrates determines the formation of 0.039 g/l pyrethrin solutions, very close to the LC₁₀ value of the WHO sensitive strain for pyrethrins, which is 0.04 g/I. A value close to LC₁₀ was selected to be able to show the synergizing effect of essential oils and of the other components used for conditioning, including the solvent/solvents (S). Two reference control groups and a control group treated with water were used. The water used was standard hard water (method WHO/M/29), with water hardness checked according to the method CIPAC MT73 (CIPAC Handbook F, p201) and corrected if necessary. The first control was a formulation of pyrethrins without synergizer, R_{P}, obtained according to the following method: 8.83 g of anionic/non-ionic surfactant agents of vegetal origin, sodium coco sulfate (Mackol^{®} CAS-100N, Rhodia, Cranbury, NJ, US), HLB = 38 and modified soy lecithin with hydrophilic - lipophilic balance HLB greater than 8 (Thermolec^{®} WFC, Archer Daniels Midland, Decatur, II, SUA) with a ratio of 4 parts : 6 parts, were dissolved in 70-75 ml of a mixture of methyl esters of fatty acids from rapeseed (biodiesel) by stirring and heating to 40-45°C. Over the resulting solution, cooled to room temperature, 2.65 g of 50% pyrethrum concentrate, and 0.2 g of tocopherol, anti-oxidizing agent, were added, it was homogenized and the rest of the solvent was added up to 100 g, resulting in R_{P}, having a 1.3% concentration of pyrethrins, and from which a 3% concentration in standard hard water is a 0.039 g/l pyrethrin solution, very close to the LC₁₀ value of the WHO sensitive fly strain for pyrethrins. The second reference control, R_{PBO}, included piperonyl butoxide, 2-(2-Butoxyetoxy)ethyl(6-propylpiperonyl) ether, (Aldrich, Sigma-Aldrich, St. Louis, MO, US) and was prepared as follows: 8.83 g anionic/non-ionic surfactant agents of vegetal origins, sodium coco sulfate (Mackol^{®} CAS-100N, Rhodia, Cranbury, NJ, US), HLB = 38 and modified soy lecithin with hydrophilic - lipophilic balance HLB greater than 8 (Thermolec^{®} WFC, Archer Daniels Midland, Decatur, II, SUA) with a ratio of 4 parts : 6 parts, were dissolved in 70-75 ml of a mixture of methyl esters of fatty acids from rapeseed (biodiesel) by stirring and heating to 40-45°C. In this mixture 2.5 g of piperonyl butoxide were added, it was homogenized for complete dissolution and then it was cooled to room temperature. Over the resulting solution, cooled to room temperature, 2.65 g of 50% pyrethrum concentrate, and 0.2 g of tocopherol, anti-oxidizing agent, were added, it was homogenized and the rest of the solvent was added up to 100 g, resulting in R_{PBO}, having a concentration of 1.3% pyrethrins and 2.5% piperonyl butoxide. A solution 3% R_{PBO} in standard hard water is a 0.039 g/l solution of pyrethrins and 0.075g/l of piperonyl butoxide.

Each of the tested products included 120 flies, distributed in triplicate into groups of 40. After treatment, the flies were kept in separate cages for 24 hours and then the dead flies were counted. Moribund flies were considered dead. Mortality was corrected according to the Abbott formula (Abbott, 1925, J. Econ. Entomol. 18:265-267) with the mortality from the control group. The data was analyzed by applying the general linear model to determine the mean values and significant differences with 5% probability from the reference composition R_{P} (Statistica 10, StatSoft, Tulsa, OK, US). The results are shown in table 1 below.

**Table 1. Mortality of flies treated topically with solutions from emulsifiable concentrates obtained according to the invention, compared to control products.**

| Experimental variant | Corrected mean mortality (%) | Significance* compared to reference product R_{P} |
|---|---|---|
| R_{P}. 0.039 g/l pyrethrins | 32.6±9.3 | - |
| R_{PBO}. 0.039 g/l pyrethrins. 0.075 g/l PBO | 78.3±8.6 | ** |
| CE1. 0.039 g/l pyrethrins. 0.039 g/l UEM | 49.6±7.3 | * |
| CE2. 0.039 g/l pyrethrins. 0.039 g/l UEP | 56.4±9.6 | * |
| CE3. 0.039 g/l pyrethrins. 0.039 g/l UEM. 0.007 g/l UEL | 66.9±11.3 | ** |
| CE4. 0.039 g/l pyrethrins. 0.065 g/l UEP. 0.007 g/l UEL | 72.3±9.3 | ** |
| CE5. 0.039 g/l pyrethrins. 0.018 g/l UEM. 0.032 g UEP | 74.6±7.6 | ** |
| CE6. 0.039 g/l pyrethrins. 0.018 g/l UEM. 0.032 g UEL. 0.007 g/l UEL | 94.6±5.3 | *** |

| | | |
|---|---|---|
| *for P>0.05 PBO - piperonyl butoxide, UEM - dill essential oils, UEP - parsley essential oils, UEL - lovage essential oils | | |

Essential oils from dill and parsley, cold extracted in the solvent S1 prepared according to example 1, with a concentration of 0.039 g/l, synergized the insecticide action of the pyrethrins towards flies, but the effect was under that of piperonyl butoxide with 0.75 g/l concentration. Essential oils from dill and/or parsley and/or lovage, extracted cold in the solvent S1 prepared according to example 1 and formulated with it, pyrethrins and conditioning agents, in CE3, CE4 and CE5, according to examples 7, 8, 9, presented similar action from a statistical point of view with the piperonyl butoxide in synergizing the insecticide action of the pyrethrins. The combination of essential oils from dill and parsley and lovage, cold extracted in the solvent S1 prepared according to example 1 and formulated with it, pyrethrins and conditioning agents, in CE6 according to example 10, had a synergizing effect superior to piperonyl butoxide under the given experimental conditions.

The combinations CE1 to CE6, obtained according to the invention, show synergic insecticide action due to their components. The formulation in sprayable form only differs in the method of application so it has similar activity.

The compositions resulting according to the examples 1 - 10, formulated in solvents S, are stable for storage over 1 year, without any component separation.

## Claims

1. Insecticide composition according to the invention, conditioned as emulsifiable concentrate. **characterized in that** consists of 1 ... 3 parts 50% pyrethrum concentrate, 1.5 ... 3 parts essential oils from dill seeds, *Anethum graveolens,* and/or from parsley seeds *Petroselinum crispum* and/or lovage leaves, *Levisticum officinale,* 7.5 ... 10 parts couple of anionic/non-ionic surfactant agents of vegetal origin, sodium coco sulfate, soy lecithin, 84 ... 90 parts solvent S, consisting of 68 ... 70 parts ethylic esters of fatty acids from vegetable oils: sunflower **characterized by** saponification index: 186 ... 192 mg KOH/g, iodine index: 130 mg iodine / 100g, fatty acid structure: palmitic (C16) 5 ... 6%, stearic (C18) 4 ... 5%, oleic (C18-1) 30 ... 40%, linoleic(C18-2) 53 ... 68%, rapeseed **characterized by** saponification index: 189 ... 205 mg KOH/g, iodine index 110 ... 116 mg iodine / 100g, fatty acid structure: palmitic (C16) 5 ... 6%, stearic (C18) 2 ... 3%, oleic (C18-1) 60 ... 65%, linoleic(C18-2) 20 ... 30% or soybean **characterized by**: saponification index: 185 ... 190 mg KOH/g, iodine index: 125 ... 136 mg iodine / 100g, fatty acid structure: stearic (C18) 4 ... 5%, oleic (C18-1) 20 ... 30%, linoleic (C18-2) 50 ... 60%, linolenic (C18-3) 8 ... 10%, 6 ... 8 parts potassium salts of fatty acids, 6 ... 8 parts glycerin, 4 ... 5 parts triglycerides, 10 ... 12 parts ethylic alcohol and 1 part lecithin.

2. The insecticide composition according to the invention, conditioned as sprayable liquid, **characterized in that** consists of: 0.01...0.02 parts 50% pyrethrum concentrate; 0.01...0.02 parts essential oils from dill seeds, *Anethum graveolens,* and/or parsley seeds, *Petroselinum crispum,* and/or lovage leaves, *Levisticum officinale,* 1 ... 1.5 parts soy lecithin, 1 ... 1.5 parts coco-glucoside as non-ionic surfactant agent, 0.001... 0.002 g tocopherol as anti-oxidizing agent, 97 ... 98 parts solvent S, consisting of 68 ... 70 parts ethylic esters of fatty acids from vegetable oils: sunflower **characterized by** saponification index: 186 ... 192 mg KOH/g, iodine index: 130 mg iodine / 100g, fatty acid structure: palmitic (C16) 5 ... 6%, stearic (C18) 4 ... 5%, oleic (C18-1) 30 ... 40%, linoleic(C18-2) 53 ... 68%, rapeseed **characterized by** saponification index: 189 ... 205 mg KOH/g, iodine index 110 ... 116 mg iodine / 100g, fatty acid structure: palmitic (C16) 5 ... 6%, stearic (C18) 2 ... 3%, oleic (C18-1) 60 ... 65%, linoleic(C18-2) 20 ... 30% or soybean **characterized by**: saponification index: 185 ... 190 mg KOH/g, iodine index: 125 ... 136 mg iodine / 100g, fatty acid structure: stearic (C18) 4 ... 5%, oleic (C18-1) 20 ... 30%, linoleic (C18-2) 50 ... 60%, linolenic (C18-3) 8 ... 10%, 6 ... 8 parts potassium salts of fatty acids, 6 ... 8 parts glycerin, 4 ... 5 parts triglycerides, 10 ... 12 parts ethylic alcohol and 1 part lecithin.

3. The method for obtaining said insecticide composition based on pyrethrins and essential oils **characterized in that** consisting of the following steps: obtaining the solvent S by the transesterification reaction of vegetable oils from sunflower and/or rapeseed and/or soybean, in an excess of ethylic alcohol, with an oil-to-alcohol ratio of 1 part to 0. 28 ... 0.32 parts and potassium hydroxide with an oil-to-potassium hydroxide ratio of 1 part la 0.019 ... 0.021 parts, at temperatures of 40...70°C, for 3 ... 5 hours; extraction of essential oils from dill seeds and/or from parsley seeds and/or from lovage leaves by maceration for 14 days at a temperature of 20...25°C in the solvent S obtained in the initial stage with a plant-to-solvent ratio of 1 part to 2...2.5 parts; filtering the maceration and obtaining the solvent S with content of essential oils, used to obtain insecticide compositions with pyrethrins; conditioning the insecticide composition as emulsifiable concentrate or as sprayable insecticide solution, by adding pyrethrum concentrate with 50 % natural pyrethrins and natural emulsifiers in the solvent S with content of essential oils.
